# EUROPÄISCHE PATENTSCHRIFT

(11) **EP 2 583 826 B1**
(45) Veröffentlichungstag und Bekanntmachung des Hinweises auf die Patenterteilung: **12.11.2014**
(21) Anmeldenummer: 12006564.4
(22) Anmeldetag: 19.09.2012
(51) Int. Cl.: B32B 38/04, G06K 19/077

(54) **Herstellung eines Inlays mit integriertem Regelkreis**
Production of an inlay with integrated control circuit
Fabrication d'un inlay avec circuit de régulation intégré

(30) Priorität: 19.10.2011 DE 102011116401
(43) Veröffentlichungstag der Anmeldung: 24.04.2013
(73) Patentinhaber: Giesecke & Devrient GmbH, 81677 München (DE)
(72) Erfinder: Hofer, Werner, 85604 Zorneding (DE); Bohn, Carsten, 81667 München (DE)

(56) Entgegenhaltungen:
- WO-A1-2011/003518

## Beschreibung

Die Erfindung betrifft ein Verfahren und eine Vorrichtung zur Herstellung eines Inlays für einen Folienverbund, insbesondere ein Inlay für die Weiterverarbeitung zu einem Wert- oder Sicherheitsdokument

Bei der Herstellung eines Inlays für einen Folienverbund werden eine Träger- und mindestens eine Ausgleichsfolie miteinander verarbeitet. Die Trägerfolie weist elektronische Bauelemente, wie z.B. Chips und Antennen, auf. Die Positionen der elektronischen Elemente werden mittels einer Kamera erfasst. Die erfassten Positionen werden an einen Laser übertragen. Der Laser schneidet an den entsprechenden Stellen in der mindestens einen Ausgleichsfolie für die elektronischen Bauelemente Aussparungen. Die Trägerfolie und die mindestens eine Ausgleichsfolie werden anschließend so zusammengebracht und miteinander fixiert, dass die elektronischen Bauelemente in den Aussparungen der mindestens einen Ausgleichsfolie zu liegen kommen. Neben dem Laser werden zur Herstellung der Aussparung weitere Verfahren verwendet, wie beispielsweise Schneidplottern, Wasserstrahlschneiden oder Stanzen.
Ein Verfahren sowie eine Vorrichtung gemäß dem beschriebenen Stand der Technik sind von der WO 2011/003518 A1 bekannt.

Problematisch ist, dass sich eine Aussparung nicht genau an der Position eines elektronischen Bauelements befindet bzw. dass sich ein elektronisches Bauelement nicht in der Aussparung befindet. Dies führt zu unnötigen Ausschuss an Inlays.

Als weiteres Problem ist zu nennen, dass die Aussparung nicht beliebig groß ausfallen darf, um das optische Erscheinungsbild des später laminierten Produktes nicht zu beeinträchtigen.

Als weiteres Problem ist zu nennen, dass Fertigungstoleranzen sich durch das Zusammenführen der Träger- und der mindestens einen Ausgleichsfolien ergeben.

Aufgabe der Erfindung ist es, dass sichergestellt ist, dass sich das elektronische Bauelement in der Aussparung befindet, wobei insbesondere Fertigungstoleranzen und die Aussparung in Relation zum elektronischen Bauelement so klein wie möglich zu halten sind.

Als Lösung schlägt die Erfindung ein Verfahren und eine Vorrichtung gemäß den Ansprüchen 1 und 4 vor. In den abhängigen Ansprüchen sind vorteilhafte Ausführungsbeispiele beschrieben.

Bei dem erfindungsgemäßen Verfahren zur Herstellung eines Inlays für einen Folienverbund, insbesondere ein Inlay für die Weiterverarbeitung zu einem Wert- oder Sicherheitsdokument, wird eine Trägerfolie mit mehreren darauf angeordneten und einander zugeordneten elektronischen Bauelementen einer ersten Bilderfassungseinrichtung zugeführt, wobei die erste Bilderfassungseinrichtung zumindest die Position von einem elektronischen Bauelement erfasst. Parallel dazu wird mindestens eine Ausgleichsfolie, welche auf die Trägerfolie aufgebracht wird, einer Schneideinrichtung zugeführt. Als Schneideinrichtung kann ein Laser, ein Schneidplotter, eine Wasserstrahlschneidvorrichtung, eine Stanzvorrichtung oder jede andere geeignete Vorrichtung verwendet werden. Die durch die erste Bilderfassungseinrichtung erfassten Daten über die Position des jeweiligen elektronischen Bauelements auf der Trägerfolie werden an die Schneideinrichtung übermittelt. Mittels der Daten wird die Schneideinrichtung zur Herstellung von Aussparungen, die zumindest an die jeweilige Position der elektronischen Bauelemente angepasst sind, gesteuert. Die mindestens eine Ausgleichsfolie mit den eingebrachten Aussparungen und das Trägermaterial werden in einer Zusammenführstation zusammengeführt und passergenau zueinander ausgerichtet zu einem Inlay fixiert. Nach der Zusammenführstation ist eine zweite Bilderfassungseinrichtung vorgesehen, die Daten über die Position von mindestens einem elektronischen Bauelement auf der Trägerfolie im Verhältnis zu der ihm jeweils zugeordneten Aussparung in der mindestens einen Ausgleichsfolie erfasst und diese Daten an die Schneideinrichtung übermittelt, so dass die Schneideinrichtung zur Herstellung von Aussparungen in der mindestens einen Ausgleichsfolie so geregelt wird, dass sich die elektronischen Bauelemente auf der Trägerfolie innerhalb der Aussparung der mindestens einen Ausgleichsfolie befinden. Ein großer Vorteil der vorliegenden Erfindung ist es, dass mittels der zweiten Bilderfassungseinrichtung die Position der elektronischen Bauelemente in den jeweiligen Aussparungen in der mindestens einen Ausgleichsfolie bestimmt wird bzw. der Abstand zwischen einem elektronischen Bauelement und der Aussparung ermittelt wird. Dadurch kann der Laser beim Herstellen der Aussparungen entsprechend korrigiert werden, sobald festgestellt wird, dass sich mindestens ein elektronisches Bauelement nicht mehr innerhalb der Aussparung, sondern teilweise oder ganz außerhalb der Aussparung befindet. Somit wird das Problem gelöst, dass sich eine elektronische Baugruppe nicht innerhalb ihrer Aussparung befindet.

Zur Erhöhung der Produktivität ist es vorteilhaft, dass die Trägerfolie und die mindestens eine Ausgleichsfolie als Bogen oder besser noch als Rollenware zur Verfügung gestellt werden. Insbesondere mittels der Rollenware ist das Rolle-zu-Bogen-Verfahren oder das sehr effektive sogenannte Rolle-zu-Rolle-Verfahren möglich. Bei dem Rolle-zu-Rolle-Verfahren werden die zu verarbeitenden Folien direkt von der Rolle verarbeitet. Das fertige Produkt wird dann wieder auf eine Rolle aufgewickelt oder vereinzelt.

Als vorteilhaftes Ausführungsbeispiel wird als elektronisches Bauelement ein Halbleiterchip oder auch eine Anzeige, ein Schaltknopf oder ein anderes geeignetes Bauelement verwendet, das je nach Anwendungsfall, wenn es sich um eine kontaktlose Anwendung handelt, durch eine Antenne ergänzt wird oder bei kontaktgebundenen Anwendungen keine Antenne, sondern geeignete elektrisch leitende Kontakte aufweist.

Entsprechend dem oben beschriebenen Verfahren weist eine Vorrichtung zur Herstellung eines Inlays für einen Folienverbund, insbesondere ein Inlay für die Weiterverarbeitung zu einem Wert- oder Sicherheitsdokument, eine erste Zuführeinrichtung für eine Trägerfolie mit mehreren darauf angeordneten und einander zugeordneten elektronischen Bauelementen auf. Eine erste Bilderfassungseinrichtung erfasst zumindest die Position eines elektronischen Bauelements auf der Trägerfolie, welche von der ersten Zuführeinrichtung zugeführt wird. Eine Schneideinrichtung schneidet Aussparungen in mindestens eine Ausgleichsfolie, welche auf die Trägerfolie aufgebracht wird. Die mindestens eine Ausgleichsfolie wird mittels einer zweiten Zuführeinrichtung der Schneideinrichtung zugeführt. Eine erste Übermittlungseinrichtung übermittelt die durch die erste Bilderfassungseinrichtung erfassten Daten über die Position zumindest eines elektronischen Bauelements auf der Trägerfolie an die Schneideinrichtung. Eine Steuereinrichtung steuert die Schneideinrichtung zur Herstellung von Aussparungen in der mindestens einen Ausgleichsfolie, wobei die Aussparungen zumindest an die jeweilige Position der elektronischen Bauelemente angepasst sind, gemäß den an die Schneideinrichtung übermittelten Daten. Eine Zusammenführstation führt die mindestens eine Ausgleichsfolie mit den darin eingebrachten Aussparungen und das Trägermaterial zusammen und fixiert die Trägerfolie und die mindestens eine Ausgleichsfolie passergenau zueinander ausgerichtet zu einem Inlay. Eine zweite Bilderfassungseinrichtung ist nach der Zusammenführstation angeordnet, die Daten über die Position von mindestens einem elektronischen Bauelement auf der Trägerfolie im Verhältnis zu der ihm jeweils zugeordneten Aussparung für ein elektronisches Bauelement in der mindestens einen Ausgleichsfolie erfasst. Eine zweite Übermittlungseinrichtung übermittelt diese Daten an die Schneideinrichtung, so dass die Schneideinrichtung zur Herstellung von Aussparungen in der mindestens einen Ausgleichsfolie so geregelt wird, dass sich die elektronischen Bauelemente auf der Trägerfolie innerhalb der Aussparung der mindestens einen Ausgleichsfolie befinden. Die oben für das Verfahren genannten Vorteile, gelten entsprechend auch für die hier beschriebene Vorrichtung.

Die Erfindung wird nachfolgend anhand von Figuren noch weiter veranschaulicht. Es wird darauf hingewiesen, dass die Figuren nicht maßstabsgetreu und nicht proportionsgetreu sind. Es sind jeweils nur die zum Verständnis der Erfindung wesentlichen Merkmale dargestellt. Es versteht sich, dass zusätzliche Merkmale vorhanden sein können. Gleiche Bezugsziffern bezeichnen jeweils gleiche oder entsprechende Bestandteile. In den Zeichnungen zeigen:
- Figur 1: Eine schematische Übersicht des Prinzips der Erfindung,
- Figur 2: eine Seiteansicht eines Verbunds, bestehend aus Träger- und Ausgleichsfolie und elektronischen Bauelement,
- Figur 3: eine Draufsicht auf einen Verbund, bestehend aus Träger- und Ausgleichsfolie, mit einer Steuermarke in einer Aussparung

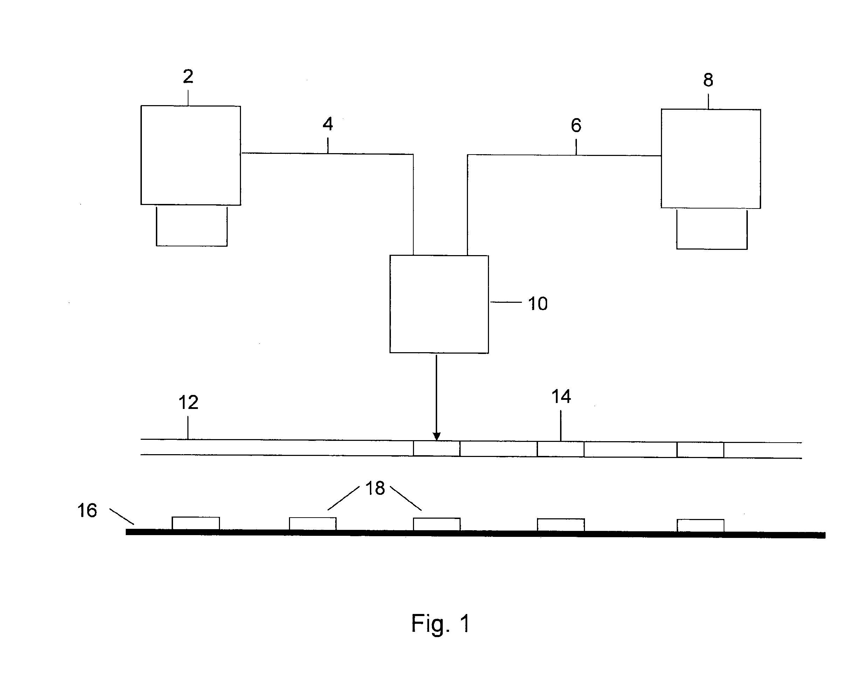

Figur 1 zeigt ein schematisches Ausführungsbeispiel der vorliegenden Erfindung. Auf einer Trägerfolie 16 sind elektronische Baugruppen 18 angeordnet. Die Positionen der elektronischen Baugruppen 18 werden durch eine erste Bilderfassungseinrichtung 2 bestimmt. Die Position der jeweiligen elektronischen Baugruppe 18 wird von der ersten Bilderfassungseinrichtung 2 über eine Verbindung 4 an eine Schneideinrichtung 10 übermittelt. Die Schneideinrichtung 10 schneidet aus einer Ausgleichsfolie 12 an einer entsprechenden Position eine Aussparung 14 für die jeweilige elektronische Baugruppe 18. Aus Gründen der Übersichtlichkeit wurden nur eine Trägerfolie 16 und nur eine Ausgleichsfolie 12 in Figur 1 dargestellt. Prinzipiell ist es jedoch möglich, dass mindestens eine Trägerfolie und mindestens eine Ausgleichsfolie gemäß der Erfindung verwendet werden. Anschließend werden die Trägerfolie 16 mit den elektronischen Baugruppen 18 und die Ausgleichsfolie 12 mit den Aussparungen 14 in einer hier nicht dargestellten Zusammenführstation zusammengeführt und passergenau zueinander ausgerichtet zu einem Inlay fixiert. Mittels einer zweiten Bilderfassungseinrichtung 8 wird die Position mindestens einer elektronischen Baugruppe 18 im Verhältnis zu seiner jeweiligen Aussparung 14 in der Ausgleichsfolie 12 bestimmt. Dieses Verhältnis wird von der zweiten Bilderfassungseinrichtung 8 über eine Verbindung 6 an die Schneideinrichtung 10 übertragen. Die Schneideinrichtung 10 kann mittels des empfangenen Verhältnisses so geregelt werden, dass sich die jeweilige elektronische Baugruppe 18 immer in der Aussparung 14 befindet. Dies ist insbesondere dann wichtig, wenn sich die elektronische Baugruppe 18 zumindest teilweise nicht innerhalb der jeweiligen Aussparung 14 befindet, denn dann muss das Verfahren nachjustiert werden, z.B. muss die Schneideinrichtung überprüft und evtl. neu eingestellt werden, was in der Regel automatisch erfolgt. Somit besteht ein Regelkreis, welcher dafür sorgt, dass sich die elektronischen Baugruppen 18 vollständig innerhalb der Aussparung 14 befinden.

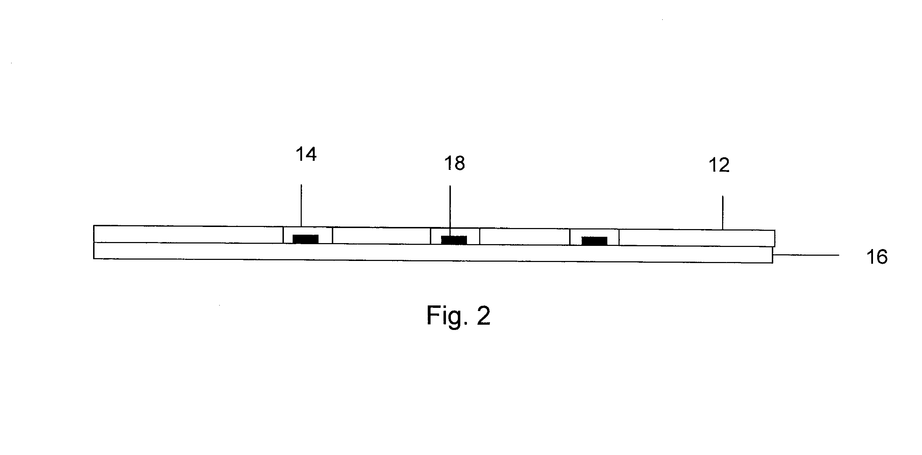

Figur 2 zeigt eine Schnittansicht durch einen Verbund, bestehend aus einer Trägerfolie 16 mit darauf angeordneten elektronischen Baugruppen 18. Die elektronischen Baugruppen 18 befinden sich innerhalb der Aussparungen 14 der Ausgleichsfolie 12.

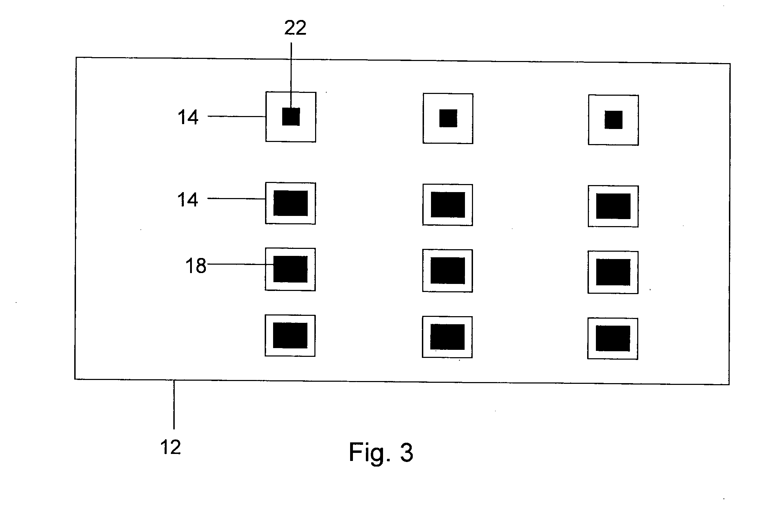

Figur 3 zeigt eine Draufsicht eines weiteren Ausführungsbeispiels der Erfindung. Hier befindet sich in einer Aussparung 14 anstatt einer elektronischen Baugruppe 18 eine Steuermarke 22. Als Steuermarke 22 kann ein Positionierelement 20, eine farbige Markierung, eine Stanzung oder jede andere geeignete Markierung verwendet werden. Sobald sich der Abstand zwischen der Steuermarke 22 und der Aussparung 14 verändert, ist dies ein Hinweis darauf, dass der Prozess nicht mehr stabil läuft und entsprechend korrigiert werden muss. Der Abstand der Steuermarke 22 zur Aussparung 14 wird ebenfalls durch die zweite Bilderfassungseinrichtung 8 überwacht, ähnlich zur Überwachung des bereits oben diskutierten Verhältnisses bzw. Abstandes zwischen elektronischer Baugruppe 18 und Aussparung 14. Somit erhält man ein sogenanntes I1Pokayoke" -Element, das zur Qualitätsprüfung während der Produktion verwendet werden kann.

## Patentansprüche

1. Verfahren zur Herstellung eines Inlays für einen Folienverbund, insbesondere ein Inlay für die Weiterverarbeitung zu einem Wert- oder Sicherheitsdokument,
- bei dem eine Trägerfolie (16) mit mehreren darauf angeordneten und einander zugeordneten elektronischen Bauelementen (18) einer ersten Bilderfassungseinrichtung (2) zugeführt wird, wobei die erste Bilderfassungseinrichtung (2) zumindest die Position von einem elektronischen Bauelement (18) erfasst,
- bei dem mindestens eine auf der Trägerfolie (16) aufzubringende Ausgleichsfolie (12) zunächst einer Schneideinrichtung (10) zugeführt wird
- bei dem die durch die erste Bilderfassungseinrichtung (2) erfassten Daten über die Position des jeweiligen elektronischen Bauelements (18) auf der Trägerfolie (16) an die Schneideinrichtung (10) übermittelt werden und die Schneideinrichtung (10) zur Herstellung von Aussparungen (14), die zumindest an die jeweilige Position der elektronischen Bauelemente (18) angepasst sind, angesteuert wird,
- bei dem die mindestens eine Ausgleichsfolie (12) mit den daran eingebrachten Aussparungen (14) und die Trägerfolie (16) in einer Zusammenführstation zusammengeführt und passergenau zueinander ausgerichtet zu einem Inlay fixiert werden, **dadurch gekennzeichnet, dass**
- nach der Zusammenführstation eine zweite Bilderfassungseinrichtung (8) vorgesehen ist, die Daten über die Position von mindestens einem elektronischen Bauelement (18) auf der Trägerfolie (16) im Verhältnis zu der ihm jeweils zugeordneten Aussparung (14) in der mindestens einen Ausgleichsfolie (12) erfasst und diese Daten an die Schneideinrichtung (10) übermittelt, so dass die Schneideinrichtung (10) zur Herstellung von Aussparungen (14) in der mindestens einen Ausgleichsfolie (12) so geregelt wird, dass sich die elektronischen Bauelemente (18) auf der Trägerfolie (16) innerhalb der Aussparung (14) der mindestens einen Ausgleichsfolie (12) befinden.

2. Verfahren nach einem der vorherigen Ansprüche, **dadurch gekennzeichnet, dass** die Trägerfolie (16) und die mindestens eine Ausgleichsfolie (12) als Rollenware oder als Bogen zur Verfügung gestellt werden.

3. Verfahren nach einem der vorherigen Ansprüche, **dadurch gekennzeichnet, dass** als elektronische Bauelemente (18) ein Halbleiterchip mit oder ohne eine Antennenspule zur Verfügung gestellt werden.

4. Vorrichtung zur Herstellung eines Inlays für einen Folienverbund, insbesondere ein Inlay für die Weiterverarbeitung zu einem Wert- oder Sicherheitsdokument, gemäß den vorherigen Verfahrensansprüchen,
- mit einer ersten Zuführeinrichtung für eine Trägerfolie (16) mit mehreren darauf angeordneten und einander zugeordneten elektronischen Bauelementen (18),
- mit einer ersten Bilderfassungseinrichtung (2), welcher die Trägerfolie (16) mit mehreren darauf angeordneten und einander zugeordneten elektronischen Bauelementen (18) zugeführt wird, wobei die erste Bilderfassungseinrichtung (2) zumindest die Position eines elektronischen Bauelements (18) erfasst,
- mit einer Schneideinrichtung (10), welcher eine auf der Trägerfolie (16) aufzubringende mindestens eine Ausgleichsfolie (12) mittels einer zweiten Zuführeinrichtung zugeführt wird,
- mit einer ersten Übermittlungseinrichtung (4), welche die durch die erste Bilderfassungseinrichtung (2) erfassten Daten über die Position zumindest eines elektronischen Bauelements (18) auf der Trägerfolie (16) an die Schneideinrichtung (10) übermittelt,
- mit einer Steuereinrichtung, welche die Schneideinrichtung (10) zur Herstellung von Aussparungen (14) in der mindestens einen Ausgleichsfolie (12), wobei die Aussparungen (14) zumindest an die jeweilige Position der elektronischen Bauelemente (18) angepasst sind, gemäß den an die Schneideinrichtung (10) übermittelten Daten steuert,
- mit einer Zusammenführstation, bei der die mindestens eine Ausgleichsfolie (12) mit den daran eingebrachten Aussparungen (14) und die Trägerfolie zusammengeführt und passergenau zueinander ausgerichtet zu einem Inlay fixiert werden, **dadurch gekennzeichnet**, durch
- eine zweite Bilderfassungseinrichtung (8), die nach der Zusammenführstation angeordnet ist, die Daten über die Position von mindestens einem elektronischen Bauelement (18) auf der Trägerfolie (16) im Verhältnis zu der ihm jeweils zugeordneten Aussparung (14) für ein elektronisches Bauelement (18) in der mindestens einen Ausgleichsfolie (12) erfasst und
- eine zweite Übermittlungseinrichtung (6), welche diese Daten an die Schneideinrichtung (10) übermittelt, so dass die Schneideinrichtung (10) zur Herstellung von Aussparungen (14) in der mindestens einen Ausgleichsfolie (12) mittels der Steuereinrichtung so geregelt wird, dass sich die elektronischen Bauelemente (18) auf der Trägerfolie (16) innerhalb der Aussparung (14) der mindestens einen Ausgleichsfolie (12) befinden.

## Claims

1. A method for manufacturing an inlay for a foil composite, in particular an inlay for the further processing into a value document or security document,
- wherein a carrier foil (16) with several electronic components (18) arranged thereon and mutually associated is fed to a first image capturing device (2), wherein the first image capturing device (2) captures at least the position of one electronic component (18),
- wherein at least one compensation foil (12) to be applied to the carrier foil (16) is initially fed to a cutting device (10),
- wherein the data captured by the first image capturing device (2) about the position of the respective electronic component (18) on the carrier foil (16) are transmitted to the cutting device (10), and the cutting device (10) is driven for manufacturing gaps (14) which are adapted at least to the respective position of the electronic components (18),
- wherein the at least one compensation foil (12) with the gaps (14) introduced therein and the carrier foil (16) are joined in a joining station and are fixed in mutual register to form an inlay, **characterized in that**
- downstream from the joining station a second image capturing device (8) is provided which captures data about the position of at least one electronic component (18) on the carrier foil (16) relative to the gap (14) respectively associated therewith in the at least one compensation foil (12), and transmits these data to the cutting device (10), so that the cutting device (10) is so regulated for manufacturing gaps (14) in the at least one compensation foil (12) that the electronic components (18) on the carrier foil (16) are disposed within the gap (14) of the at least one compensation foil (12).

2. The method according to any of the preceding claims, **characterized in that** the carrier foil (16) and the at least one compensation foil (12) are made available in the form of rolled goods or sheets.

3. The method according to any of the preceding claims, **characterized in that** as electronic components (18) a semiconductor chip with or without antenna coil is made available.

4. An apparatus for manufacturing an inlay for a foil composite, in particular an inlay for further processing into a value document or security document, according to the preceding method claims, having
- a first feeding device for a carrier foil (16) with several electronic components (18) arranged thereon and mutually associated,
- a first image capturing device (2) to which the carrier foil (16) with several electronic components (18) arranged thereon and mutually associated is fed, wherein the first image capturing device (2) captures at least the position of one electronic component (18),
- a cutting device (10) to which at least one compensation foil (12) to be applied to the carrier foil (16) is fed by means of a second feeding device,
- a first transmission device (4) transmitting to the cutting device (10) the data captured by the first image capturing device (2) about the position of at least one electronic component (18) on the carrier foil (16),
- a control device controlling the cutting device (10) for manufacturing gaps (14) in the at least one compensation foil (12), wherein the gaps (14) are adapted at least to the respective position of the electronic components (18), in accordance with the data transmitted to the cutting device (10),
- a joining station, wherein the at least one compensation foil (12) with the gaps (14) incorporated therein and the carrier foil are joined and fixed in mutual register to form an inlay, **characterized in that**
- a second image capturing device (8) arranged downstream from the joining station captures the data about the position of at least one electronic component (18) on the carrier foil (16) relative to the gap (14) respectively associated therewith for one electronic component (18) in the at least one compensation foil (12) and
- a second transmission device (6) transmitting these data to the cutting device (10), so that for manufacturing gaps (14) in the at least one compensation foil (12) the cutting device (10) is so regulated by means of the control device that the electronic components (18) on the carrier foil (16) are disposed within the gap (14) of the at least one compensation foil (12).

## Revendications

1. Procédé de fabrication d'un intercalaire pour un film composite, notamment un intercalaire pour le traitement subséquent destiné à l'obtention d'un document de valeur ou de sécurité,
▪ dans lequel un film support (16) sur lequel sont agencés plusieurs composants électroniques (18) affectés les uns aux autres est acheminé à un premier équipement de saisie d'image (2), le premier équipement de saisie d'image (2) saisissant au moins la position d'un composant électronique (18),
▪ dans lequel au moins un film d'égalisation (12) à appliquer sur le film support (16) est tout d'abord acheminée à un équipement de découpe (10),
▪ dans lequel les données sur la position du composant électronique (18) respectif sur le film support (16) saisies par le premier équipement de saisie d'image (2) sont transmises à l'équipement de découpe (10), et l'équipement de découpe (10) est piloté pour la confection d'évidements (14) qui sont au moins adaptés à la position respective des composants électroniques (18),
▪ dans lequel le au moins un film d'égalisation (12) comportant les évidements (14) y étant pratiqués et le film support (16) sont joints dans une station de jonction et sont fixés en repérage l'un par rapport à l'autre de manière à former un intercalaire, **caractérisé en ce que**
▪ après la station de jonction, un deuxième équipement de saisie d'image (8) est prévu, qui saisit des données sur la position d'au moins un composant électronique (18) sur le film support (16) par rapport à l'évidement (14) lui étant respectivement affecté dans le au moins un film d'égalisation (12) et qui transmet ces données à l'équipement de découpe (10), de telle sorte que l'équipement de découpe (10) est réglé de telle façon pour la confection d'évidements (14) dans la au moins un film d'égalisation (12) que les composants électroniques (18) situés sur le film support (16) se trouvent à l'intérieur de l'évidement (14) du au moins un film d'égalisation (12).

2. Procédé selon une des revendications précédentes, **caractérisé en ce que** le film support (16) et le au moins un film d'égalisation (12) sont mis à disposition sous forme de rouleaux ou de feuille.

3. Procédé selon une des revendication précédentes, **caractérisé en ce que**, en tant que composants électroniques (18), une puce semi-conductrice avec ou sans une bobine d'antenne sont mis à disposition.

4. Dispositif de fabrication d'un intercalaire pour un film composite, notamment un intercalaire pour le traitement subséquent destiné à l'obtention d'un document de valeur ou de sécurité selon les revendication de procédé précédentes,
▪ comprenant un premier équipement d'acheminement pour un film support (16) sur lequel sont agencés plusieurs composants électroniques (18) affectés les uns aux autres,
▪ comprenant un premier équipement de saisie d'image (2) auquel est acheminé le film support (16) sur lequel sont agencés plusieurs composants électroniques (18) affectés les uns aux autres, le premier équipement de saisie d'image (2) saisissant au moins la position d'un composant électronique (18),
▪ comprenant un équipement de découpe (10) auquel un au moins un film d'égalisation (12) à appliquer sur le film support (16) est acheminé au moyen d'une deuxième équipement d'acheminement,
▪ comprenant un premier équipement de transmission (4) qui transmet les données saisies par le premier équipement de saisie d'image (2) sur la position d'au moins un composant électronique (18) sur le film support (16) à l'équipement de découpe (10),
▪ comprenant un premier équipement de pilotage qui pilote l'équipement de découpe (10) pour la confection d'évidements (14) dans le au moins un film d'égalisation (12), les évidements (14) étant au moins adaptés à la position respective des composants électroniques (18), en fonction des données transmises à l'équipement de découpe (10),
▪ comprenant une station de jonction dans laquelle le au moins un film d'égalisation (12) comportant les évidements (14) y étant pratiqués et le film support sont joints et fixés en repérage l'un par rapport à l'autre de manière à former un intercalaire, **caractérisé en ce qu'**un deuxième équipement de saisie d'image (8) agencé après la station de jonction saisit des données sur la position d'au moins un composant électronique (18) sur le film support (16) par rapport à l'évidement (14) lui étant respectivement affecté pour un composant électronique (18) dans le au moins un film d'égalisation (12) et
▪ un deuxième équipement de transmission (6) qui transmet ces données à l'équipement de découpe (10), de telle sorte que l'équipement de découpe (10) est réglé de telle façon pour la confection d'évidements (14) dans le au moins un film d'égalisation (12) au moyen de l'équipement de pilotage que les composants électroniques (18) situés sur le film support (16) se trouvent à l'intérieur de l'évidement (14) du au moins un film d'égalisation (12).
